# EUROPÄISCHE PATENTSCHRIFT

(11) **EP 4 289 016 B1**
(45) Veröffentlichungstag und Bekanntmachung des Hinweises auf die Patenterteilung: **08.07.2026**
(21) Anmeldenummer: 22701525.2
(22) Anmeldetag: 19.01.2022
(51) Int. Cl.: H01M 10/42, H01M 50/505, H01M 50/507, H01M 50/516, H01M 50/528, H01M 50/543

(54) **VERFAHREN ZUR AUFBEREITUNG EINER BATTERIE**
PROCESS FOR BATTERY RECONDITIONING
PROCÉDÉ DE CONDITIONNEMENT DE BATTERIE

(30) Priorität: 02.02.2021 DE 102021102316
(43) Veröffentlichungstag der Anmeldung: 13.12.2023
(73) Patentinhaber: Müller Service GmbH, 87781 Ungerhausen (DE)
(72) Erfinder: WEGENER, Maximilian, 87435 Kempten (Allgäu) (DE)
(74) Vertreter: Heeschen Pültz Patentanwälte PartGmbB
(86) Internationale Anmeldenummer: PCT/DE2022/100050
(87) Internationale Veröffentlichungsnummer: WO 2022/167035

(56) Entgegenhaltungen:
- DE-A1- 102011 120 470
- DE-A1- 102012 215 206
- DE-A1- 102016 200 120
- US-A1- 2019 190 054

## Beschreibung

Die Erfindung betrifft ein Verfahren zur Aufbereitung einer Batterie mit mindestens zwei Batteriezellen, die mit einer ersten Verbindungseinheit elektrisch verbunden sind, und eine Batterie mit einer Batteriezelle und einer Austauschbatteriezelle.

Batterien werden in einer Vielzahl von technischen Produkten eingesetzt. Die Anwendungsgebiete von Batterien wurden in der Vergangenheit vielfältiger. Beispielsweise wird derzeit eine Vielzahl an konventionellen Antrieben durch elektrische Antriebe ersetzt, deren Energiequelle häufig eine Batterie ist. Ferner werden kabelgebundene Energieversorgungen durch integrierte Batterien ersetzt, da somit die fortschreitende Miniaturisierung technischer Produkte vorangetrieben und der Komfort für einen Benutzer verbessert wird.

Der daraus resultierende sprunghafte Anstieg der Anzahl eingesetzter Batterien führt jedoch dazu, dass eine effiziente Nutzung dieser Batterien und der in den Batterien enthaltenen Komponenten erforderlich ist, um einerseits die Wirtschaftlichkeit des Batterieeinsatzes zu steigern und andererseits um negative ökologische Einflüsse gering zu halten.

Trotz einzelner marktreifer Ansätze, stehen lediglich wenige Verfahren zur Aufbereitung von Batterien zur Verfügung. Batterien umfassen in der Regel eine Vielzahl von Batteriezellen, die elektrisch miteinander kontaktiert sind. Diese Kontaktierung kann beispielsweise mit einer Busbar erfolgen. Bei einer Aufbereitung einer Batterie wird die Busbar von den Batteriezellen durch mechanische Krafteinwirkung entfernt. Hierbei können die Batteriezellen beschädigt werden oder die Pole der Batteriezellen befinden sich in einem nicht wiederverwendbaren Zustand. Infolgedessen werden eine Vielzahl von Batterien und Batteriezellen nicht wiederverwendet und müssen entsorgt werden.

Effiziente Ansätze zur Aufbereitung von Batterien bestehen derzeit nicht, insbesondere da die Trennung der Batteriezellen voneinander lediglich mit hohem technischem Aufwand und/oder mit deren Beschädigung möglich ist. Beispielsweise hat die Anwendung von laserbasierten Verfahren gezeigt, dass dieses zwar zu zufriedenstellenden Ergebnissen führen kann, jedoch die Trennung einer Batteriezelle von einer Busbar bis zu mehrere Tage dauert und somit kein in der Praxis anwendbares Verfahren darstellt.

Die DE102012215206A1 offenbart eine Batteriezelle, ein Batteriezellmodul und ein Verfahren zur Herstellung eines Batteriezellmoduls. Die DE102011120470A1 offenbart eine Batterie mit einer Anzahl von elektrisch miteinander verschalteten Einzelzellen und ein Verfahren zur Wartung, Reparatur und/oder Optimierung einer solchen Batterie. Die US 2019/0190054 A1 offenbart eine Vorrichtung zur Verarbeitung von Batterieinformationen, eine Vorrichtung zur Unterstützung der Batterieherstellung, eine Batterieanordnung, ein Verfahren zur Verarbeitung von Batterieinformationen sowie ein Verfahren zur Herstellung einer Batterieanordnung.

Es ist daher eine Aufgabe der Erfindung, ein Verfahren zur Aufbereitung einer Batterie und eine Batterie bereitzustellen, die einen oder mehrere der genannten Nachteile vermindern oder beseitigen. Insbesondere ist es eine Aufgabe der Erfindung, eine Lösung bereitzustellen, die eine kostengünstige und/oder ökologisch nachhaltige Aufbereitung von Batterien ermöglicht. Zumindest ist es eine Aufgabe der Erfindung, ein alternatives Verfahren und/oder eine alternative Batterie bereitzustellen.

Gemäß einem ersten Aspekt wird diese Aufgabe gelöst durch ein Verfahren gemäß Anspruch 1 zur Aufbereitung einer Batterie mit mindestens zwei Batteriezellen, die mit einer ersten Verbindungseinheit elektrisch verbunden sind, wobei zwischen der ersten Verbindungseinheit und den Batteriezellen elektrisch leitende Kontaktverbindungen wirken, umfassend die Schritte: Lösen der ersten Verbindungseinheit von den Batteriezellen durch Entfernen der Kontaktverbindungen, Ersetzen mindestens einer Batteriezelle der Batterie durch eine Austauschbatteriezelle, und elektrische Kontaktierung der Batteriezelle beziehungsweise der Batteriezellen und der mindestens einen Austauschbatteriezelle, wobei das Entfernen der Kontaktverbindungen mit einem trennenden Fertigungsverfahren erfolgt.

Der Erfindung liegt die Erkenntnis zugrunde, dass der Erfolg batteriebetriebener Systeme maßgeblich davon abhängt, dass Batterien effizient eingesetzt werden können. Derzeit werden beispielsweise Batterien mit einer Leistungsfähigkeit von weniger als 80 % aus Fahrzeugen ausgebaut und in der Regel anschließend nicht weiterverwendet. Es ist daher derzeit eine hohe Anzahl an nicht weiter verwendbaren Batterien zu erwarten.

Mit dem im Vorherigen beschriebenen Verfahren zur Aufbereitung einer Batterie wird ermöglicht, dass eine bereits verwendete Batterie derart aufbereitet wird, dass diese für Folgeanwendungen, beispielsweise für Stromspeicher oder für Fahrzeugbatterien mit geringeren Anforderungen, eingesetzt werden.

Ferner haben die Erfinder herausgefunden, dass das Verfahren zur Aufbereitung einer Batterie ein reproduzierbares Verfahren darstellt. Das Verfahren ist für unterschiedlichste Batterien anwendbar, ohne dass auf spezifische Ausprägungen der ersten Verbindungseinheit oder der Pole der einzelnen Batteriezellen geachtet werden muss. Insbesondere kann das Verfahren auch für solche Batterien angewendet werden, deren spezifisches Herstellverfahren unbekannt ist. Dies ist insbesondere daher erforderlich, weil der Aufbereiter einer Batterie regelmäßig nicht der Hersteller einer Batterie ist.

Außerdem wird mit trennenden Fertigungsverfahren eine definierte mechanische Beeinflussung an den Batteriezellen und an der ersten Verbindungseinheit bewirkt, sodass diese bei der elektrischen Kontaktierung der Batteriezelle beziehungsweise der Batteriezellen und der mindestens einen Austauschbatteriezelle in vorteilhafterweise berücksichtigt werden können.

Das Verfahren zeichnet sich darüber hinaus durch eine hohe Prozessgeschwindigkeit aus. Ferner wurde herausgefunden, dass das Verfahren kostengünstig einsetzbar ist. Darüber hinaus ist die Verfügbarkeit von Werkzeugen für trennende Fertigungsverfahren in der Regel als gut zu bewerten. Dadurch kann die Aufbereitung von Batterien industrialisiert in Serie erfolgen und eine nachhaltige Verwendung von Batterien wird ermöglicht.

Unter einer Batterie wird grundsätzlich eine Speichereinheit zum Speichern von elektrischer Energie verstanden. Die Batterie kann beispielsweise als Akkumulator ausgebildet sein. Die Batterie kann beispielsweise zur Versorgung eines Fahrzeugantriebs und/oder einen Stromspeicher ausgebildet sein und/oder eine Kapazität von mehr als 10 kWh, mehr als 25 kWh, mehr als 50 kWh und/oder mehr als 75 kWh aufweisen.

Eine Batterie umfasst in der Regel eine Vielzahl einzelner Batteriezellen. Die Batteriezellen einer Batterie können zu Batteriemodulen zusammengefasst werden, sodass eine Batterie aus einem, zwei oder mehr Batteriemodulen besteht oder diese umfasst. Ein Batteriemodul weist in der Regel eine Kapazität von weniger als 10 kWh, weniger als 5 kWh, insbesondere von weniger als 2 kWh, auf. Die Batteriezellen können beispielsweise elektrochemische Energiespeicher sein.

Während der Nutzung einer solchen Batterie treten üblicherweise an den Batteriezellen Defekte bzw. Verschleiß auf, die bzw. der deren Leistungsfähigkeit verringern bzw. verringert. Diese Batteriezellen reduzieren auch die Leistungsfähigkeit der Batterie. Der Erfindung lag ferner die Erkenntnis zugrunde, dass Batterien wiederaufbereitet werden können, indem Batteriezellen mit verringerter Leistungsfähigkeit ausgetauscht werden.

Unter einer Aufbereitung einer Batterie wird insbesondere eine Änderung der Zusammensetzung hinsichtlich der Batteriezellen verstanden. Die Aufbereitung kann beispielsweise zur Steigerung der Leistungsfähigkeit führen, jedoch ist dies nicht zwingend erforderlich. Beispielsweise können aus zwei Batterien mit einer jeweiligen Leistungsfähigkeit von 75 % zwei aufbereitete Batterien bereitgestellt werden, wobei eine Batterie 80 % Leistungsfähigkeit und die andere 70 % Leistungsfähigkeit aufweist.

Die Batteriezellen sind mit einer ersten Verbindungseinheit elektrisch verbunden. Die erste Verbindungseinheit kann beispielsweise eine Busbar und/oder ein Stromsammler sein. Die erste Verbindungseinheit ist insbesondere derart angeordnet und ausgebildet, dass diese die mindestens zwei Batteriezellen elektrisch und/oder mechanisch verbindet. Hierfür weist die erste Verbindungseinheit vorzugsweise ein elektrisch leitendes Material auf oder besteht aus einem elektrisch leitenden Material.

Um eine elektrische Verbindung zwischen der ersten Verbindungseinheit und den Batteriezellen zu gewährleisten, wirken zwischen der ersten Verbindungseinheit und den Batteriezellen elektrisch leitende Kontaktverbindungen, die darüber hinaus eine mechanische Verbindung ausbilden können. Die elektrisch leitenden Kontaktverbindungen können beispielsweise mittels einer stoffschlüssigen Verbindung jeweils zwischen den Batteriezellen und der ersten Verbindungseinheit ausgebildet sein. Die stoffschlüssige Verbindung kann beispielsweise durch einen Schweißpunkt ausgebildet werden. Darüber hinaus können die Kontaktverbindungen auch als eine selbstständige Kontakteinheit ausgebildet sein, die jeweils mit den Batteriezellen und der ersten Verbindungseinheit verbunden sind. Ergänzend oder alternativ können die Kontaktverbindungen auch Teil der ersten Verbindungseinheit und/oder der Batteriezellen sein.

Um die erste Verbindungseinheit von den Batteriezellen zu lösen, werden die Kontaktverbindungen entfernt. Das Entfernen der Kontaktverbindungen erfolgt mit einem trennenden Fertigungsverfahren. Unter einem trennenden Fertigungsverfahren wird insbesondere ein solches Fertigungsverfahren verstanden, bei dem von einem Werkstück ein Teil abgetrennt wird, wobei dieser Teil in Form eines Spans ausgebildet sein kann. Eine Auswahl von trennenden Fertigungsverfahren ist beispielsweise in der deutschen Norm DIN 8580 enthalten. Das Entfernen der Kontaktverbindungen kann zu einem Materialabtrag an der ersten Verbindungseinheit und/oder an einer, zwei oder mehrerer der Batteriezellen führen. Das Entfernen der Kontaktverbindungen erfolgt insbesondere derart, dass die erste Verbindungseinheit mit geringem Kraftaufwand von den Batteriezellen gelöst werden kann. Dies bedeutet insbesondere, dass im Wesentlichen keine mechanische Verbindung zwischen der ersten Verbindungseinheit und den Batteriezellen besteht.

Ferner umfasst das Verfahren das Ersetzen mindestens einer Batteriezelle der Batterie durch eine Austauschbatteriezelle. Dieses Ersetzen kann beispielsweise den Ausbau einer, zwei oder mehrerer Batteriezellen und den Einbau von Austauschbatteriezellen umfassen. Es ist insbesondere bevorzugt, dass eine den ausgebauten Batteriezellen entsprechende Anzahl an Austauschbatteriezellen eingebaut werden. Ferner kann eine niedrigere oder höhere Anzahl an Austauschbatteriezellen im Vergleich zu der Anzahl an ausgebauten Batteriezellen vorgesehen werden.

Darüber hinaus kann dieser Schritt jedoch auch eine Vereinzelung der Batteriezellen der Batterie umfassen und eine anschließende Neuordnung der Batteriezellen umfassen. Von einer Batterie mit n Batteriezellen können somit auch n-1 Batteriezellen ausgetauscht werden. Die derart aufgearbeitete Batterie kann die gleiche Anzahl an, mehr oder weniger Batteriezellen aufweisen als eine, zwei oder mehrere Batterien, aus denen die Batteriezellen ausgebaut wurden.

Die Austauschbatteriezelle kann eine neue bzw. im Wesentlichen ungebrauchte oder eine gebrauchte Batteriezelle sein. Es ist bevorzugt, dass die Austauschbatteriezelle eine Leistungsfähigkeit aufweist, die im Wesentlichen der Leistungsfähigkeit der verbliebenen Batteriezelle beziehungsweise der verbliebenen Batteriezellen entspricht. Die Batteriezelle beziehungsweise Batteriezellen und die Austauschbatteriezelle können gleich oder verschieden aufgebaut sein.

Darüber hinaus umfasst das Verfahren den Schritt der elektrischen Kontaktierung der Batteriezelle beziehungsweise der Batteriezellen und der mindestens einen Austauschbatteriezelle. Wie im Folgenden noch näher erläutert wird, kann diese elektrische Kontaktierung mit verschiedenen Verfahren und beispielsweise mit einer Verbindungseinheit, insbesondere einer ersten Verbindungseinheit und/oder zweiten Verbindungseinheit, erfolgen. Bei der elektrischen Kontaktierung werden vorzugsweise Kontaktverbindungen zwischen der Batteriezelle beziehungsweise den Batteriezellen und der Austauschbatteriezelle und einer beziehungsweise der Verbindungseinheit ausgebildet. Die Kontaktverbindungen können an den Batteriezellen bzw. an deren Polen an der gleichen Stelle wie vor dem Ersetzen oder an einer anderen Stelle wirken.

Eine bevorzugte Ausführungsvariante des Verfahrens zeichnet sich dadurch aus, dass die Kontaktverbindungen durch einen Materialabtrag an der ersten Verbindungseinheit und/oder an den Batteriezellen, insbesondere an Polen der Batteriezellen, entfernt werden. Unter einem Materialabtrag an der ersten Verbindungseinheit und/oder an den Batteriezellen ist insbesondere zu verstehen, dass auch ein Materialabtrag an den Kontaktverbindungen als solchen erfolgen kann. Es handelt sich vorzugsweise um eine geometrisch bestimmte Veränderung der ersten Verbindungseinheit und/oder der Batteriezellen, insbesondere der Pole der Batteriezellen, sodass das Verfahren eine hohe Prozessstabilität aufweist und reproduzierbar ausführbar ist.

Das trennende Fertigungsverfahren kann ein Verfahren mit geometrisch bestimmter Schneide, insbesondere ein Fräsverfahren und/oder ein Bohrverfahren, und/oder ein Verfahren mit geometrisch unbestimmter Schneide, insbesondere ein Schleifverfahren, sein.

Eine weitere bevorzugte Ausführungsvariante des Verfahrens zeichnet sich dadurch aus, dass für das Entfernen der Kontaktverbindungen ein Zerspanungswerkzeug eingesetzt wird. Ein Zerspanungswerkzeug wird insbesondere zum Spanen mit geometrisch bestimmter Schneide verwendet. Das Zerspanungswerkzeug ist vorzugsweise ein Fräswerkzeug, das beispielsweise als ein Stirnfräswerkzeug und/oder ein Schaftfräswerkzeug ausgebildet sein kann. Darüber hinaus kann das Zerspanungswerkzeug ein Bohrwerkzeug sein. Das Bohrwerkzeug oder das Fräswerkzeug weisen vorzugsweise einen möglichst großen Spitzenwinkel auf, da dadurch eine geringe Beeinflussung der Batteriezelle gewährleistet ist. Je größer der Spitzenwinkel des Bohrwerkzeugs bzw. des Fräswerkzeugs, desto größer ist der Materialabtrag an der Batteriezelle beziehungsweise am Pol der Batteriezelle. Der Spitzenwinkel des Fräs- und/oder Bohrwerkzeugs beträgt vorzugsweise mehr als 150°, mehr als 160°, mehr als 170° und/oder mehr als 175°.

Die Verwendung eines Zerspanungswerkzeuges ermöglicht eine hohe Prozessstabilität trotz der filigranen Bearbeitung an den Batteriezellen. Somit kann gegenüber den konventionellen Verfahren zur Entfernung einer Verbindungseinheit von Batteriezellen eine besonders geringe negative Beeinflussung der Batteriezellen ermöglicht werden. Darüber hinaus sind Zerspanungswerkzeuge in der Regel gut verfügbar und dies in unterschiedlichsten anwendungsgerechten Ausführungen.

Eine weitere Fortbildung des Verfahrens zeichnet sich dadurch aus, dass eine Vorschubrichtung des Zerspanungswerkzeugs im Wesentlichen orthogonal zu einer Oberfläche der ersten Verbindungseinheit und/oder einer Poloberfläche einer der Batteriezellen ausgerichtet ist.

Im Wesentlichen orthogonal bedeutet insbesondere, dass die Vorschubrichtung weniger als 20°, weniger als 10°, weniger als 5° und/oder weniger als 2,5° von einer Flächenorthogonalen der Oberfläche der ersten Verbindungseinheit und/oder der Poloberfläche abweicht. Die Poloberfläche ist insbesondere als eine Fläche eines Pols der Batteriezellen zu verstehen. Die Poloberfläche kann flächenparallel zu einer flächigen Erstreckung der ersten Verbindungseinheit sein.

In einer weiteren bevorzugten Ausführungsvariante ist vorgesehen, dass die Vorschubrichtung des Zerspanungswerkzeugs im Wesentlichen orthogonal zu einer flächigen Erstreckung der ersten Verbindungseinheit ausgerichtet ist. In vorteilhafterweise wird durch diese Ausführungsvariante eine zielgerichtete Entfernung der Kontaktverbindung mit geringer Beeinflussung der ersten Verbindungseinheit und/oder der Batteriezelle ermöglicht.

Eine weitere bevorzugte Fortbildung des Verfahrens zeichnet sich dadurch aus, dass die Kontaktverbindungen jeweils in einem Kontaktabschnitt wirken und das Zerspanungswerkzeug einen Werkzeugdurchmesser aufweist, der größer als eine Haupterstreckungsrichtung des Kontaktabschnitts ist.

Die Kontaktabschnitte befinden sich jeweils insbesondere zwischen einer der Batteriezellen und der ersten Verbindungseinheit. Jeweils eine Kontaktverbindung wirkt zwischen einer Batteriezelle und der ersten Verbindungseinheit. Der Kontaktabschnitt ist insbesondere als der Abschnitt zu verstehen, in dem eine Batteriezelle mit der ersten Verbindungseinheit elektrisch und/oder mechanisch verbunden ist. Dies kann beispielsweise eine Schweißstelle sein. Die Haupterstreckungsrichtung des Kontaktabschnitts ist die Richtung, in der der Kontaktabschnitt sich mit seiner größten Erstreckung erstreckt, also beispielsweise die größte Erstreckung einer Schweißstelle.

Die Haupterstreckungsrichtung erstreckt sich vorzugsweise in einer Ebene mit der flächigen Erstreckung der ersten Verbindungseinheit und/oder der Poloberfläche der Batteriezelle. Wenn der Werkzeugdurchmesser größer als die Haupterstreckungsrichtung des Kontaktabschnitts ausgebildet ist, kann eine Kontaktverbindung mit lediglich einer Vorschubbewegung entfernt werden. Somit wird das mehrmalige Hin- und Herbewegen des Zerspanungswerkzeugs vermieden. Infolgedessen ist das Verfahren schnell auszuführen und der damit verbundene Aufwand ist gering. Darüber hinaus ist die Automatisierbarkeit besonders vorteilhaft möglich, sodass die Anwendung des Verfahrens in der Serienfertigung ermöglicht wird.

Es ist vorgesehen, dass das Verfahren den Schritt umfasst: Überprüfen der Leistungsfähigkeit der Batteriezellen. Die Überprüfung der Leistungsfähigkeit der Batteriezellen kann beispielsweise eine Spannungsmessung und/oder eine Messung der Kapazität sein. Insbesondere kann dies mit einer Widerstands- und/oder Impedanzmessung erfolgen. Das Überprüfen der Leistungsfähigkeit erfolgt vorzugsweise vor dem Ersetzen mindestens einer Batteriezelle.

Das Überprüfen der Leistungsfähigkeit der Batteriezellen ermöglicht, dass Batteriezellen mit ähnlicher Leistungsfähigkeit in einer Batterie verbaut werden können und somit eine besonders effiziente Verwendung der einzelnen Batteriezellen ermöglicht wird. Die effiziente Verwendung ergibt sich unter anderem daraus, da die schwächste Batteriezelle häufig die Leistungsfähigkeit der Batterie definiert und somit durch die Verwendung von Batteriezellen mit ähnlicher Leistungsfähigkeit ein besonders effizienter Einsatz der Batteriezellen ermöglicht wird.

Es ist vorgesehen, dass das Verfahren den Schritt umfasst: Kategorisieren der überprüften Batteriezellen in mindestens zwei Leistungskategorien auf Grundlage eines Ergebnisses des Überprüfens.

Ein Ergebnis des Überprüfens kann ein, zwei oder mehrere Messergebnisse umfassen. Es ist vorgesehen, dass ein vordefinierter Schwellwert für die Leistungsfähigkeit, insbesondere ein Widerstand und/oder eine Impedanz, zum Kategorisieren verwendet wird. Ferner ist es bevorzugt, dass die Leistungsfähigkeit ein Wert für den State of Health ist, beispielsweise 80 %.

Es ist vorgesehen, dass die Batteriezelle für eine erste und/oder zweite Anwendung bei Überschreiten des Schwellwerts und für eine dritte Anwendung bei Unterschreiten des Schwellwerts kategorisiert wird. Batteriezellen für eine zweite Anwendung können eine höhere Leistungsfähigkeit aufweisen als Batterien, die für eine dritte Anwendung vorgesehen sind. Der Schwellwert der Leistungsfähigkeit kann beispielsweise 70 % betragen. Die erste Anwendung kann beispielsweise die Verwendung der Batteriezelle in einem ersten Batterielebenszyklus, insbesondere für eine Fahrzeugbatterie, betreffen. Die zweite Anwendung kann beispielsweise die Verwendung der Batteriezelle in einem zweiten Batterielebenszyklus, insbesondere für eine Fahrzeugbatterie und/oder einen Stromspeicher, betreffen. Die dritte Anwendung kann beispielsweise die Verwendung der Batteriezelle in einem dritten Batterielebenszyklus, insbesondere für einen Stromspeicher, betreffen. Durch die Kategorisierung der überprüften Batteriezellen wird ein serientaugliches Verfahren zur Aufbereitung von Batterien unterschiedlicher Leistungsfähigkeit ermöglicht.

In einer weiteren bevorzugten Ausführungsvariante des Verfahrens ist vorgesehen, dass die elektrische Kontaktierung der Batteriezelle beziehungsweise der Batteriezellen und der mindestens einen Austauschbatteriezelle mit einer Verbindungseinheit erfolgt.

Die Verbindungseinheit kann dieselbe erste Verbindungseinheit sein, mit der bereits die Batteriezellen in der Ausgangskonfiguration verbunden waren. Darüber hinaus kann die Verbindungseinheit eine weitere gleiche erste Verbindungseinheit sein, insbesondere eine neue erste Verbindungseinheit. Des Weiteren kann die Verbindungseinheit eine von der ersten Verbindungseinheit verschiedene, zweite Verbindungseinheit sein.

Die Verwendung derselben ersten Verbindungseinheit hat den Vorteil, dass besonders ressourceneffiziente Batterien bereitgestellt werden, da die erste Verbindungseinheit wiederverwendet wird. Darüber hinaus kann eine durch das trennende Fertigungsverfahren erzeugte Öffnung an der ersten Verbindungseinheit in vorteilhafterweise isolierend verwendet werden. Die Verwendung einer weiteren ersten Verbindungseinheit kann eine optimale Verbindbarkeit zwischen der mindestens einen Austauschbatteriezelle und der Batteriezelle bzw. den Batteriezellen ermöglichen. Die Verwendung einer zweiten Verbindungseinheit kann eine optimale Anpassung an die Neukonfiguration aus der mindestens einen Austauschbatteriezelle und der Batteriezelle beziehungsweise der Batteriezellen ermöglichen, beispielsweise wie im Folgenden noch dargestellt wird, mit einer speziellen Geometrie.

Eine weitere bevorzugte Ausführungsform des Verfahrens zeichnet sich dadurch aus, dass Kontaktierungsabschnitte der zweiten Verbindungseinheit auf einer der Batteriezellen zugewandten Kontaktseite konvex ausgebildet sind. Es ist bevorzugt, dass die konvexen Kontaktierungsabschnitte schalenförmig ausgebildet sind.

Die Kontaktierungsabschnitte der zweiten Verbindungseinheit sind insbesondere solche Abschnitte beziehungsweise Bereiche der zweiten Verbindungseinheit, innerhalb derer Kontaktverbindungen mit den Batteriezellen beziehungsweise der mindestens einen Austauschbatteriezelle ausgebildet werden. Diese sind beispielsweise derart vorgesehen, dass an diesen eine Schweißstelle ausgebildet wird.

Schalenförmig kann beispielsweise halbkugelförmig, oval und/oder eckig bedeuten. Die konvexen Kontaktierungsabschnitte können beispielsweise als Mulden oder als Prägung ausgebildet sein. In vorteilhafter Weise erfolgt somit eine bessere geometrische Anpassung der Verbindungseinheit an die Batteriezellen, die sich somit einfacher mit der Verbindungseinheit verbinden lassen. Aufgrund dessen ist der Aufwand zur elektrischen Kontaktierung geringer.

Gemäß einer weiteren bevorzugten Ausführungsvariante des Verfahrens ist vorgesehen, dass die elektrische Kontaktierung der Batteriezelle beziehungsweise der Batteriezellen und der mindestens einen Austauschbatteriezelle mit einem Schweißverfahren und/oder einem Lötverfahren erfolgt. Darüber hinaus kann die elektrische Kontaktierung mit Schrauben und/oder Klemmen erfolgen. Die Kontaktierung kann beispielsweise die Anordnung einer Verbindungseinheit, insbesondere der ersten und/oder der zweiten Verbindungseinheit, sein, und ein anschließendes Verschweißen oder Verlöten dieser Verbindungseinheit mit der beziehungsweise den Batteriezellen und der mindestens einen Austauschbatteriezelle. Das Verbinden mittels eines Schweißverfahrens oder eines Lötverfahrens ermöglicht eine vorteilhafte Verbindung zur elektrischen Kontaktierung sowie eine hohe Reproduzierbarkeit des Verfahrens.

Gemäß einer weiteren bevorzugten Ausführungsvariante des Verfahrens ist vorgesehen, dass die Kontaktverbindungen vor dem Lösen der ersten Verbindungseinheit jeweils in einem ersten Polabschnitt der Batteriezelle bzw. in ersten Polabschnitten der Batteriezellen wirken und/oder die Batteriezelle bzw. die Batteriezellen derart elektrisch kontaktiert werden, dass Kontaktverbindungen in einem von dem ersten Polabschnitt verschiedenen, zweiten Polabschnitt der Batteriezelle bzw. in von den ersten Polabschnitten verschiedenen, zweiten Polabschnitten der Batteriezellen ausgebildet werden.

Die Polabschnitte sind Abschnitte des Pols der Batteriezelle. Der zweite Polabschnitt ist verschieden von dem ersten Polabschnitt, wobei der zweite Polabschnitt vorzugsweise neben dem ersten Polabschnitt angeordnet ist. Der zweite Polabschnitt befindet sich vorzugsweise neben dem ersten Polabschnitt. Es ist insbesondere bevorzugt, dass der erste Polabschnitt angrenzend an ein erstes seitliches Ende des Pols und der zweite Polabschnitt angrenzend an ein von dem ersten Ende verschiedenes, zweites Ende des Pols angeordnet ist

Der erste Polabschnitt kann sich ferner vorzugsweise mittig am Pol befinden, sodass sich auf beiden Seiten des ersten Polabschnitts jeweils ein zweiter Polabschnitt befindet. Es ist insbesondere bevorzugt, dass sich der zweite Polabschnitt in einem Bereich angrenzend an ein seitliches Ende des Pols und ferner vorzugsweise angrenzend an den ersten Polabschnitt befindet. Somit ergibt sich eine bessere Verbindbarkeit der Verbindungseinheit mit der Batteriezelle bzw. den Batteriezellen und der Austauschbatteriezelle, sodass das Verfahren eine bessere Automatisierbarkeit und darüber hinaus eine bessere Reproduzierbarkeit aufweist.

Gemäß einem weiteren Aspekt wird die eingangs genannte Aufgabe gelöst durch eine Batterie mit einer Batteriezelle und einer Austauschbatteriezelle, die mit einer Verbindungseinheit elektrisch verbunden sind, wobei zwischen der Verbindungseinheit und der Batteriezelle sowie zwischen der Verbindungseinheit und der Austauschbatteriezelle elektrisch leitende Kontaktverbindungen wirken, wobei vorzugsweise die Batterie mit einem Verfahren nach einer der im Vorherigen benannten Ausführungsvarianten hergestellt ist.

Die Batterie umfasst insbesondere mindestens eine Batteriezelle und/oder mindestens eine Austauschbatteriezelle. Vorzugsweise umfasst die Batterie zwei oder mehr Batteriezellen und/oder zwei oder mehr Austauschbatteriezellen.

Die Verbindungseinheit kann eine im Vorherigen bereits beschriebene erste Verbindungseinheit und/oder zweite Verbindungseinheit sein. Die im Vorherigen beschriebene Batterie zeichnet sich durch eine höhere Leistungsfähigkeit und eine höhere Effizienz aus. Diese höhere Effizienz betrifft insbesondere eine bessere Ausnutzung der verfügbaren Leistungsfähigkeiten von Batteriezellen. Die Austauschbatteriezelle ist vorzugsweise analog zu der Batteriezelle aufgebaut. Die Austauschbatteriezelle ist insbesondere eine solche Batteriezelle, die bei der Neuherstellung der Batterie nicht enthalten war und/oder eine nachträglich eingesetzte Batteriezelle.

Gemäß einer bevorzugten Ausführungsvariante der Batterie ist vorgesehen, dass die Austauschbatteriezelle eine höhere Leistungsfähigkeit als die Batteriezelle, insbesondere die entnommene Batteriezelle, aufweist. Bei der Austauschbatteriezelle handelt es sich um eine gebrauchte Batteriezelle. Die Austauschbatteriezelle ist eine kategorisierte Batteriezelle, wie es im Vorherigen bereits beschrieben wurde.

Eine bevorzugte Ausführungsvariante der Batterie zeichnet sich dadurch aus, dass die Batteriezelle und/oder die Austauschbatteriezelle jeweils einen ersten Polabschnitt und einen von dem ersten Polabschnitt verschiedenen, zweiten Polabschnitt aufweisen, wobei der erste Polabschnitt der Batteriezelle eine Kontaktverbindung aufwies, bevor diese entfernt wurde, und/oder die Kontaktverbindungen zwischen der Batteriezelle und der Verbindungseinheit und/oder zwischen der Austauschbatteriezelle und der Verbindungseinheit in dem zweiten Polabschnitt wirken. Die Polabschnitte sind insbesondere als unterschiedliche Bereiche des Pols der Batteriezelle beziehungsweise der Austauschbatteriezelle zu verstehen. Die Polabschnitte können auch als Bereiche zum Kontaktieren verstanden werden. Diese Ausführungsvariante hat den Vorteil, dass eine gute Verbindung zwischen der Verbindungseinheit und der Batteriezelle beziehungsweise der Austauschbatteriezelle herstellbar ist.

Eine weitere bevorzugte Fortbildung der Batterie zeichnet sich dadurch aus, dass die Verbindungseinheit konvex ausgebildete Kontaktierungsabschnitte aufweist.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Verfahrens verwiesen.

Bevorzugte Ausführungsbeispiele werden exemplarisch anhand der beiliegenden Figuren erläutert. Es zeigen:
- Figur 1:: eine schematische, dreidimensionale Ansicht einer beispielhaften Ausführungsform einer Batterie;
- Figur 2:: eine schematische, zweidimensionale Detailansicht der Batterie;
- Figur 3:: eine schematische, dreidimensionale Ansicht der Batterie nach Anwendung eines Teilschritts des Verfahrens;
- Figur 4:: eine schematische, dreidimensionale Ansicht der Batterie nach Anwendung eines Teilschritts des Verfahrens;
- Figur 5:: eine schematische, dreidimensionale Ansicht der Batterie aus Figur 1 mit einer Austauschzelle und zweiten Verbindungseinheiten;
- Figur 6:: ein schematisches Verfahren; und
- Figur 7:: ein weiteres schematisches Verfahren.

In den Figuren sind gleiche oder im Wesentlichen funktionsgleiche beziehungsweise -ähnliche Elemente mit den gleichen Bezugszeichen bezeichnet.

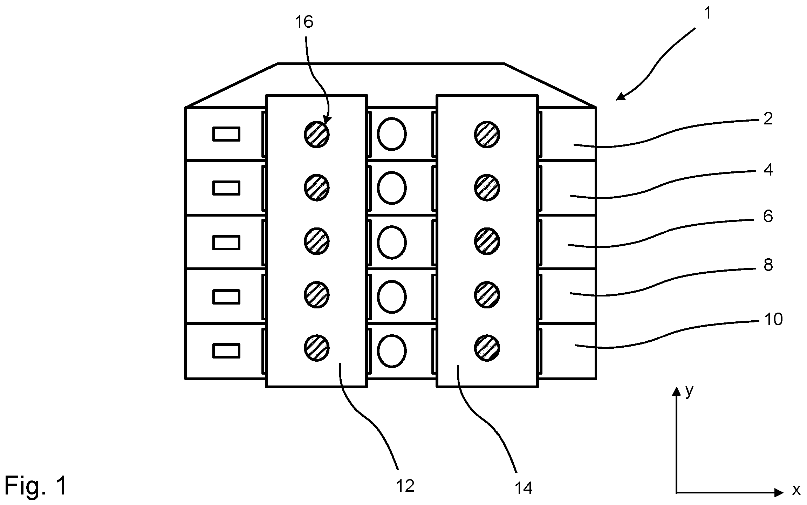

Figur 1 zeigt eine Batterie 1 mit Batteriezellen 2, 4, 6, 8, 10. Die Batteriezellen 2 - 10 sind mit zwei ersten Verbindungseinheiten 12, 14 elektrisch verbunden.

Zwischen den ersten Verbindungseinheiten 12, 14 und den Batteriezellen 2 - 10 wirken elektrisch leitende Kontaktverbindungen 16, wobei lediglich die Kontaktverbindung der linken ersten Verbindungseinheit 12 mit der Batteriezelle 2 mit dem Bezugszeichen 16 versehen ist. Die weiteren Kontaktverbindungen sind analog hierzu aufgebaut.

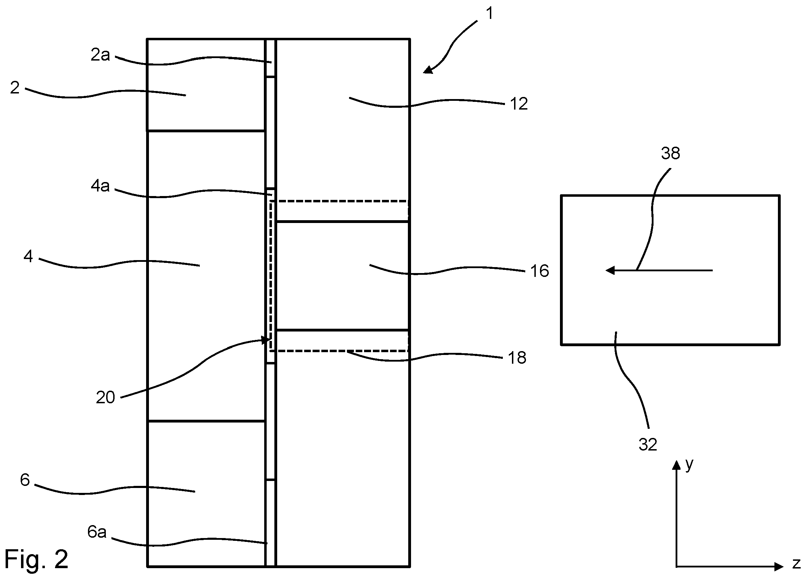

In Figur 2 ist eine Schnittdarstellung der Batterie 1 gezeigt, wobei hier lediglich ein Ausschnitt gezeigt ist. Insbesondere ist hier die Kontaktverbindung 16 zwischen der ersten Verbindungseinheit 12 und der Batteriezelle 4 gezeigt, wobei die Verbindungseinheit 12 und die Batteriezelle 4 mittels des Pols 4a der Batteriezelle 4 miteinander gekoppelt sind. Die Kontaktverbindung 16 verbindet die erste Verbindungseinheit 12 mit der Batteriezelle 4. Die Kontaktverbindung 16 kann beispielsweise eine Schweißstelle sein. Für die Aufbereitung der Batterie 1 kann es erforderlich sein, dass die erste Verbindungseinheit 12 von den Batteriezellen 2 - 10 gelöst wird. Hierfür müssen die Kontaktverbindungen 16 entfernt werden. Gemäß dem vorherigen beschriebenen Verfahren zur Aufbereitung einer Batterie 1 wird die Kontaktverbindung 16 mit einem trennenden Fertigungsverfahren entfernt. Dies erfolgt mit einem Bohrwerkzeug 32, dessen Werkzeugdurchmesser größer als eine Haupterstreckungsrichtung eines Kontaktabschnitts der Kontaktverbindung 16 ist. Der Kontaktabschnitt erstreckt sich in der x,y-Ebene.

Die Vorschubrichtung 38 des als Bohrwerkzeug 32 ausgebildeten Zerspanungswerkzeugs ist orthogonal zu einer Oberfläche der ersten Verbindungseinheit 12 sowie zu einer Poloberfläche des Pols 4a bzw. der Batteriezelle 4 ausgerichtet, nämlich in z-Richtung. Durch ein Bohren der Bohrung bzw. Öffnung 18, die hier gestrichelt dargestellt ist, mit dem Bohrwerkzeug 32, wird die Kontaktverbindung 16 entfernt. Hierdurch entsteht einerseits eine Öffnung in der ersten Verbindungseinheit 12 sowie eine Vertiefung 20 im Pol 4a der Batteriezelle 4. Es ist bevorzugt, dass die Vertiefung 20 im Pol 4a der Batteriezelle 4 so gering wie möglich ausfällt oder vermieden wird. In der Regel ist diese jedoch durch den Spitzenwinkel des Bohrwerkzeugs 32 nicht vollständig zu vermeiden.

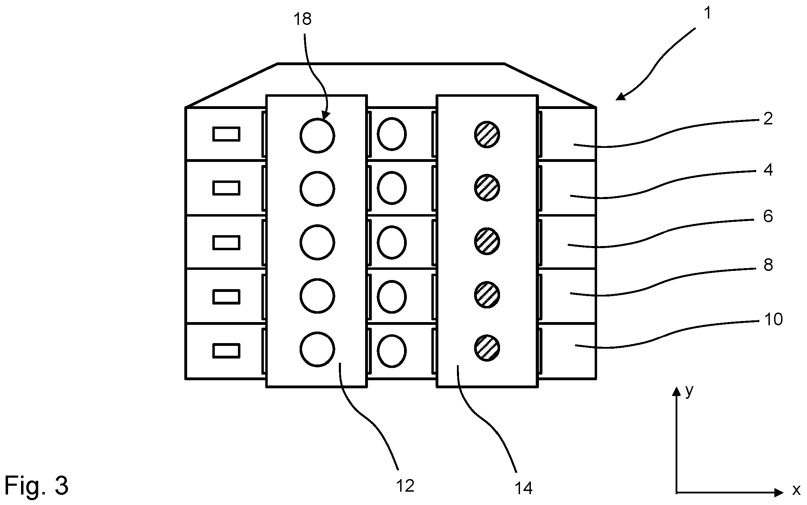

In Figur 3 ist die Batterie aus der Figur 1 gezeigt, wobei hier der Zustand nach dem Entfernen der Kontaktverbindungen 16 gezeigt ist, diese sind nämlich entfernt und die Öffnungen 18 sind ersichtlich. Durch das Entfernen der Kontaktverbindungen 16 kann die erste Verbindungseinheit 12 nun von den Batteriezellen 2 - 10 gelöst werden.

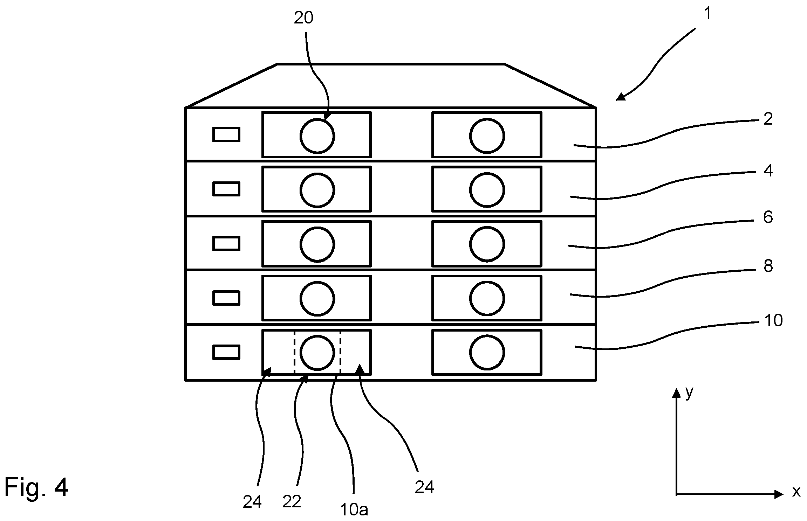

In Figur 4 ist der Zustand der Batterie 1 mit gelösten und entfernten ersten Verbindungseinheiten 12, 14 gezeigt. Infolgedessen sind lediglich die Vertiefungen 20 in den Polen 2a, 4a, 6a, 8a, 10a der Batteriezellen 2 - 10 ersichtlich.

Exemplarisch für die Batteriezellen 2 - 10 ist ein beispielhafter Aufbau des Pols 10a anhand der Batteriezelle 10 gezeigt. Der Pol 10a umfasst einen ersten Polabschnitt 22, der mittig angeordnet ist. Der erste Polabschnitt 22 weist die Vertiefung 20 auf. Angrenzend an den mittig angeordneten ersten Polabschnitt 22 weist der Pol 10a ferner zwei zweite Polabschnitte 24 auf, die auch als seitliche Polabschnitte bezeichnet werden können.

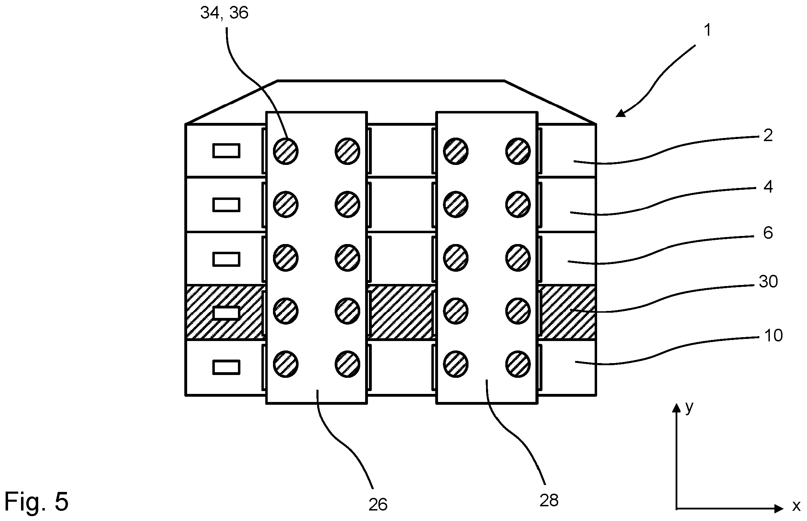

In Figur 5 ist die aufbereitete Batterie 1 gezeigt. Die aufbereitete Batterie 1 weist die Batteriezellen 2 - 6, 10 sowie die Austauschbatteriezelle 30 auf. Die Batteriezelle 8 wurde gegen die Austauschbatteriezelle 30 ersetzt. Die Batteriezellen 2 - 6, 10, 30 sind mit zweiten Verbindungseinheiten 26, 28 elektrisch kontaktiert. Jeder Pol 2a, 4a, 6a, 10a der Batteriezellen 2 - 6, 10, 30 ist mit zwei Kontaktverbindungen 34 mit jeder der zweiten Verbindungseinheiten 26, 28 verbunden. Sollte die verfügbare Größe des Pols 2a, 4a, 6a, 10a und der ersten Kontaktverbindung 16 es ermöglichen, kann die Verbindung auch mit lediglich einer Kontaktverbindung 34 erfolgen. Darüber hinaus ist zu erkennen, dass sich diese Kontaktverbindungen 34 innerhalb den zweiten Polabschnitten befinden. Jeder Pol 2a, 4a, 6a, 10a kann auch mit einer Kontaktverbindung 34 mit jeder der zweiten Verbindungseinheiten 26, 28 verbunden werden.

Die zweiten Verbindungseinheiten 26, 28 weisen auf einer den Batteriezellen 2 - 6, 10, 30 zugewandten Kontaktseite konvex ausgebildete Geometrien auf, die als Mulden 36 dargestellt sind. Diese ragen in die Bildebene hinein und können mit einem Schweißverfahren in besonders vorteilhafter Weise mit den Polen 10a verschweißt werden.

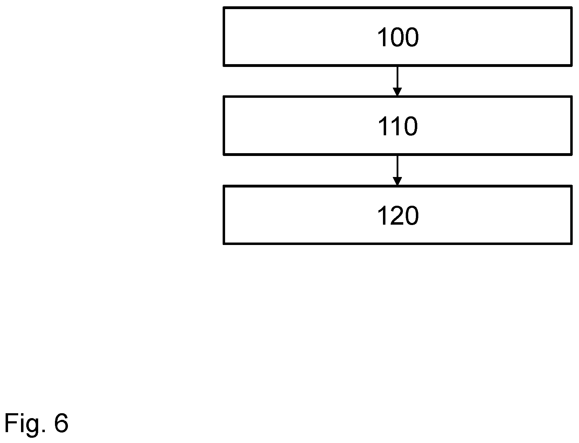

Figur 6 zeigt ein schematisches Verfahren zur Aufbereitung einer Batterie 1 mit mehreren Batteriezellen 2 - 10, die mit einer ersten Verbindungseinheit 12, 14 elektrisch verbunden sind, wobei zwischen der ersten Verbindungseinheit 12, 14 und den Batteriezellen 2 - 10 elektrisch leitende Kontaktverbindungen 16 wirken.

In dem Schritt 100 wird die erste Verbindungseinheit 12, 14 von den Batteriezellen 2 - 10 gelöst. Dieses Lösen erfolgt durch ein Entfernen der Kontaktverbindungen 16, wobei dies mit einem trennenden Fertigungsverfahren erfolgt. Hierfür kann beispielsweise ein Bohrwerkzeug 32 verwendet werden. Alternativ kann hierfür beispielsweise ein Fräswerkzeug oder ein Schleifwerkzeug eingesetzt werden.

Im Schritt 110 wird mindestens eine Batteriezelle 2 - 10 der Batterie 1 durch eine Austauschbatteriezelle 30 ersetzt. Hierfür wird die mindestens eine Batteriezelle 2 - 10 aus der Batterie 1 herausgenommen und die Austauschbatteriezelle 30 wird in die Batterie 1 eingesetzt.

In Schritt 120 werden die Batteriezellen 2 - 10 und die mindestens eine Austauschbatteriezelle 30 elektrisch kontaktiert. Diese elektrische Kontaktierung kann beispielsweise mit einer zweiten Verbindungseinheit 26, 28 erfolgen, alternativ auch mit der oder einer ersten Verbindungseinheit 12, 14.

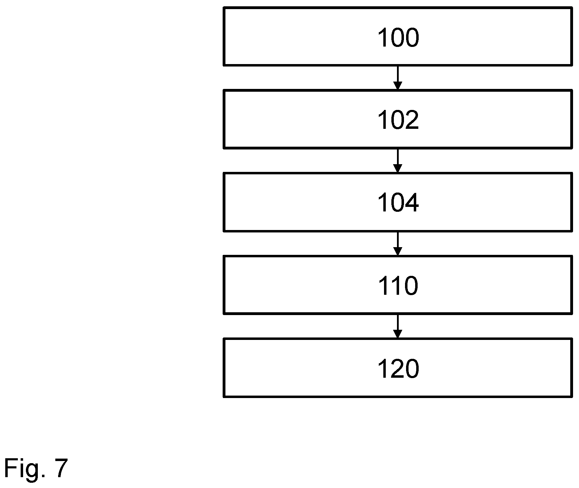

In Figur 7 ist ein bevorzugtes schematisches Verfahren gezeigt. In dem Verfahren sind die Schritte 102 und 104 gegenüber dem in Figur 6 gezeigten Verfahren ergänzt. In Schritt 102 wird die Leistungsfähigkeit der Batteriezellen 2 - 10 überprüft. Die Leistungsfähigkeit kann beispielsweise mit einer Widerstands- und/oder Impedanzmessung erfolgen. Das Überprüfen wird vor dem Ersetzen 110 durchgeführt.

In Schritt 104 werden die überprüften Batteriezellen in mindestens zwei Leistungskategorien auf Grundlage eines Ergebnisses des Überprüfens kategorisiert. Hierbei wird vorzugsweise ein vordefinierter Schwellwert für die Leistungsfähigkeit, beispielsweise ein Widerstand oder eine Impedanz, zum Kategorisieren verwendet.

Es ist insbesondere bevorzugt, dass die Schritte 102 und/oder 104 vor dem Schritt 100 durchgeführt werden. Insbesondere können die Schritte 102 und/oder 104 auf Basis von Informationen durchgeführt werden, die während der Nutzung der Batterien aufgezeichnet wurden.

Durch das im Vorherigen beschriebene Verfahren zur Aufbereitung einer Batterie 1 wird ein reproduzierbares Verfahren zur Aufbereitung von Batterien 1 bereitgestellt. Dieses Verfahren ist für unterschiedliche Batterien 1 anwendbar, da dieses unabhängig von der Geometrie der Pole und der Kontaktverbindungen 16, 34 auszuführen ist. Werkzeuge 32 für trennende Fertigungsverfahren sind darüber hinaus gut verfügbar, beispielsweise die im Vorherigen beschriebenen Bohrwerkzeuge 32. Darüber hinaus wird mit dem Bohrwerkzeug 32 eine definierte Beschädigung an den Batteriezellen 2 - 10 und an der Verbindungseinheit 12, 14 hervorgerufen, sodass der Prozess gut steuerbar ist. Das Verfahren zeichnet sich ferner durch eine hohe Geschwindigkeit und geringe Kosten aus.

### BEZUGSZEICHEN

- 1: Batterie
- 2: Batteriezelle
- 2a: Pol
- 4: Batteriezelle
- 4a: Pol
- 6: Batteriezelle
- 6a: Pol
- 8: Batteriezelle
- 10: Batteriezelle
- 10a: Pol
- 12: erste Verbindungseinheit
- 14: erste Verbindungseinheit
- 16: Kontaktverbindung
- 18: Bohrung
- 20: Vertiefung
- 22: erster Polabschnitt
- 24: zweiter Polabschnitt
- 26: zweite Verbindungseinheit
- 28: zweite Verbindungseinheit
- 30: Austauschbatteriezelle
- 32: Bohrwerkzeug
- 34: Kontaktverbindung
- 36: Mulde
- 38: Vorschubrichtung

## Patentansprüche

1. Verfahren zur Aufbereitung einer Batterie (1) mit mindestens zwei Batteriezellen (2-10), die mit einer ersten Verbindungseinheit (12, 14) elektrisch verbunden sind, wobei zwischen der ersten Verbindungseinheit (12, 14) und den Batteriezellen (2-10) elektrisch leitende Kontaktverbindungen (16) wirken, umfassend die Schritte:
- Lösen der ersten Verbindungseinheit (12, 14) von den Batteriezellen (2-10) durch Entfernen der Kontaktverbindungen (16) mit einem trennenden Fertigungsverfahren;
- Überprüfen der Leistungsfähigkeit der Batteriezellen (2-10);
- Kategorisieren der überprüften Batteriezellen (2-10) in mindestens zwei Leistungskategorien auf Grundlage eines Ergebnisses des Überprüfens, wobei ein vordefinierter Schwellwert für die Leistungsfähigkeit zum Kategorisieren verwendet wird, und wobei die Batteriezelle (2-10) für eine zweite Anwendung bei Überschreiten des Schwellwerts und für eine dritte Anwendung bei Unterschreiten des Schwellwerts kategorisiert wird;
- Ersetzen mindestens einer Batteriezelle (2-10) der Batterie (1) durch eine kategorisierte, gebrauchte Austauschbatteriezelle (30); und
- Elektrische Kontaktierung der Batteriezelle (2-10) bzw. der Batteriezellen (2-10) und der mindestens einen Austauschbatteriezelle (30).

2. Verfahren nach Anspruch 1, wobei die Kontaktverbindungen (16) durch einen Materialabtrag an der ersten Verbindungseinheit (12, 14) und/oder an den Batteriezellen (2-10) entfernt werden.

3. Verfahren nach einem der vorherigen Ansprüche, wobei für das Entfernen der Kontaktverbindungen (16) ein Zerspanungswerkzeug, insbesondere ein Fräswerkzeug, vorzugsweise ein Stirnfräswerkzeug, und/oder ein Bohrwerkzeug (32), eingesetzt wird.

4. Verfahren nach dem vorherigen Anspruch 3, wobei eine Vorschubrichtung des Zerspanungswerkzeugs im Wesentlichen orthogonal zu einer Oberfläche der ersten Verbindungseinheit (12, 14) und/oder einer Poloberfläche einer der Batteriezellen (2-10) ausgerichtet ist.

5. Verfahren nach einem der vorherigen Ansprüche 3-4, wobei die Kontaktverbindungen (16) jeweils in einem Kontaktabschnitt zwischen einer der Batteriezellen (2-10) und der ersten Verbindungseinheit (12, 14) wirken und das Zerspanungswerkzeug einen Werkzeugdurchmesser aufweist, der größer als eine Haupterstreckungsrichtung des Kontaktabschnitts ist.

6. Verfahren nach einem der vorherigen Ansprüche,
- wobei das Überprüfen der Leistungsfähigkeit der Batteriezellen (2-10) mit einer Widerstands- und/oder Impedanzmessung erfolgt,
- wobei vorzugsweise das Überprüfen vor dem Ersetzen mindestens einer Batteriezelle (2-10) erfolgt.

7. Verfahren nach einem der vorherigen Ansprüche,
- wobei der vordefinierte Schwellwert für die Leistungsfähigkeit ein Widerstand und/oder eine Impedanz ist.

8. Verfahren nach einem der vorherigen Ansprüche, wobei die elektrische Kontaktierung der Batteriezelle (2-10) bzw. der Batteriezellen (2-10) und der mindestens einen Austauschbatteriezelle (30) mit einer Verbindungseinheit (12, 14, 26, 28) erfolgt, insbesondere
- mit derselben ersten Verbindungseinheit (12, 14), und/oder
- mit einer weiteren ersten Verbindungseinheit, und/oder
- mit einer von der ersten Verbindungseinheit verschiedenen, zweiten Verbindungseinheit (26, 28).

9. Verfahren nach dem vorherigen Anspruch 8, wobei
- Kontaktierungsabschnitte (36) der zweiten Verbindungseinheit (26, 28) auf einer der Batteriezellen (2-10) zugewandten Kontaktseite konvex ausgebildet sind, und
- vorzugsweise die konvexen Kontaktierungsabschnitte schalenförmig ausgebildet sind.

10. Verfahren nach einem der vorherigen Ansprüche, wobei die elektrische Kontaktierung der Batteriezelle (2-10) bzw. der Batteriezellen (2-10) und der mindestens einen Austauschbatteriezelle (30) mit einem Schweißverfahren und/oder einem Lötverfahren erfolgt.

11. Verfahren nach einem der vorherigen Ansprüche, wobei die Kontaktverbindungen (16) vor dem Lösen der ersten Verbindungseinheit (12, 14) jeweils in einem ersten Polabschnitt der Batteriezelle (2-10) bzw. in ersten Polabschnitten der Batteriezellen (2-10) wirken und die Batteriezelle (2-10) bzw. die Batteriezellen (2-10) derart elektrisch kontaktiert werden, dass Kontaktverbindungen (34) jeweils in einem von dem ersten Polabschnitt verschiedenen, zweiten Polabschnitt der Batteriezelle (2-10) bzw. in von den ersten Polabschnitten verschiedenen, zweiten Polabschnitten der Batteriezellen (2-10) ausgebildet werden.

## Claims

1. Method for conditioning a battery (1) having at least two battery cells (2-10) electrically connected to a first connecting unit (12, 14), electrically conductive contact connections (16) acting between the first connecting unit (12, 14) and the battery cells (2-10), comprising the steps of:
- detaching the first connecting unit (12, 14) from the battery cells (2-10) by removing the contact connections (16) with a detaching manufacturing process;
- checking the performance of the battery cells (2-10);
- categorizing the checked battery cells (2-10) into at least two performance categories based on a result of the checking, wherein a predefined threshold value for the performance used for categorizing, and categorizing the battery cell (2-10) for a second application when the threshold value is exceeded and for a third application when the threshold value is not reached;
- replacing at least one battery cell (2-10) of the battery (1) with a categorized, used replacement battery cell (30); and
- electrically contacting the battery cell (2-10) or battery cells (2-10) and the at least one replacement battery cell (30).

2. Method according to claim 1, wherein the contact connections (16) are removed by a material removal at the first connecting unit (12, 14) and/or at the battery cells (2-10).

3. Method according to any one of the previous claims, wherein a cutting tool, in particular a milling tool, preferably a face milling tool, and/or a drilling tool (32) is used for removing the contact connections (16).

4. Method according to the previous claim 3, wherein a feed direction of the cutting tool is oriented substantially orthogonally to a surface of the first connecting unit (12, 14) and/or a pole surface of one of the battery cells (2-10).

5. Method according to any one of the previous claims 3-4, wherein the contact connections (16) each act in a contact section between one of the battery cells (2-10) and the first connecting unit (12, 14) and the cutting tool has a tool diameter larger than a main extension direction of the contact section.

6. Method according to any one of the previous claims, wherein
- checking the performance of the battery cells (2-10) is performed with a resistance and/or impedance measurement,
- preferably the checking is performed before replacing at least one battery cell (2-10).

7. Method according to any one of the previous claims,
- wherein the predefined threshold value for the performance is a resistance and/or an impedance.

8. Method according to any one of the previous claims, wherein the electrically contacting of the battery cell (2-10) or battery cells (2-10) and the at least one replacement battery cell (30) is carried out with a connecting unit (12, 14, 26, 28), in particular
- with the same first connecting unit (12, 14), and/or
- with a further first connecting unit, and/or
- with a second connecting unit (26, 28) different from the first connecting unit.

9. Method according to the previous claim 8, wherein
- contacting sections (36) of the second connecting unit (26, 28) are configured convex on a contact side facing the battery cells (2-10), and
- preferably the convex contacting sections are configured shell-shaped.

10. Method according to any one of the previous claims, wherein the electrically contacting of the battery cell (2-10) or the battery cells (2-10) and the at least one replacement battery cell (30) is carried out by a welding method and/or a soldering method.

11. Method according to any one of the previous claims, wherein the contact connections (16) act in a first pole section of the battery cell (2-10) or in first pole sections of the battery cells (2-10), respectively, before detaching the first connecting unit (12, 14), and the battery cell (2-10) or the battery cells (2-10) are electrically contacted in such a way that contact connections (34) are configured in a second pole section of the battery cell (2-10), which is different from the first pole section, and in second pole sections of the battery cells (2-10), which are different from the first pole sections, respectively.

## Revendications

1. Procédé de conditionnement d'une batterie (1) comportant au moins deux éléments de batterie (2-10) reliés électriquement à une première unité de connexion (12, 14), des connexions de contact électriquement conductrices (16) intervenant entre la première unité de connexion (12, 14) et les éléments de batterie (2-10), comprenant les étapes suivantes :
- détacher la première unité de connexion (12, 14) des cellules de batterie (2-10) en retirant les connexions de contact (16) au moyen d'un procédé de fabrication de détachement ;
- vérifier les performances des cellules de batterie (2-10) ;
- classer les cellules de batterie contrôlées (2-10) en au moins deux catégories de performances sur la base du résultat du contrôle, une valeur seuil prédéfinie pour la performance étant utilisée pour le classement, et classer la cellule de batterie (2-10) pour une deuxième application lorsque la valeur seuil est dépassée et pour une troisième application lorsque la valeur seuil n'est pas atteinte ;
- le remplacement d'au moins une cellule de batterie (2-10) de la batterie (1) par une cellule de batterie de remplacement (30) classée et usagée ; et
- la mise en contact électrique de la ou des cellules de batterie (2-10) et de la au moins une cellule de batterie de remplacement (30).

2. Procédé selon la revendication 1, dans lequel les connexions de contact (16) sont supprimées par enlèvement de matière au niveau de la première unité de connexion (12, 14) et/ou au niveau des cellules de batterie (2-10).

3. Procédé selon l'une quelconque des revendications précédentes, dans lequel un outil de coupe, en particulier un outil de fraisage, de préférence un outil de surfaçage, et/ou un outil de perçage (32) est utilisé pour retirer les connexions de contact (16).

4. Procédé selon la revendication 3 précédente, dans lequel une direction d'avance de l'outil de coupe est orientée sensiblement orthogonalement à une surface de la première unité de connexion (12, 14) et/ou à une surface polaire de l'une des cellules de batterie (2-10).

5. Procédé selon l'une quelconque des revendications 3 à 4 précédentes, dans lequel les connexions de contact (16) agissent chacune dans une section de contact entre l'une des cellules de batterie (2-10) et la première unité de connexion (12, 14) et l'outil de coupe présente un diamètre supérieur à la direction principale d'extension de la section de contact.

6. Procédé selon l'une quelconque des revendications précédentes, dans lequel
- la vérification des performances des cellules de batterie (2-10) est effectuée par une mesure de résistance et/ou d'impédance,
- de préférence, la vérification est effectuée avant le remplacement d'au moins une cellule de batterie (2-10).

7. Procédé selon l'une quelconque des revendications précédentes,
- dans lequel la valeur seuil prédéfinie pour les performances est une résistance et/ou une impédance.

8. Procédé selon l'une quelconque des revendications précédentes, dans lequel la mise en contact électrique de la cellule de batterie (2-10) ou des cellules de batterie (2-10) et de la au moins une cellule de batterie de remplacement (30) est effectuée à l'aide d'une unité de connexion (12, 14, 26, 28), en particulier
- avec la même première unité de connexion (12, 14), et/ou
- avec une autre première unité de connexion, et/ou
- à l'aide d'une deuxième unité de connexion (26, 28) différente de la première unité de connexion.

9. Procédé selon la revendication 8 précédente, dans lequel
- les sections de contact (36) de la deuxième unité de connexion (26, 28) sont configurées de manière convexe sur un côté de contact faisant face aux cellules de batterie (2-10), et
- de préférence, les sections de contact convexes sont configurées en forme de coque.

10. Procédé selon l'une quelconque des revendications précédentes, dans lequel la mise en contact électrique de la cellule de batterie (2-10) ou des cellules de batterie (2-10) et de la au moins une cellule de batterie de remplacement (30) est réalisée par un procédé de soudage et/ou un procédé de brasage.

11. Procédé selon l'une quelconque des revendications précédentes, dans lequel les connexions de contact (16) agissent dans une première section polaire de la cellule de batterie (2-10) ou dans les premières sections polaires des cellules de batterie (2-10), respectivement, avant le détachement de la première unité de connexion (12, 14), et la cellule de batterie (2-10) ou les cellules de batterie (2-10) sont mises en contact électrique de telle sorte que des connexions de contact (34) sont configurées dans une deuxième section polaire de la cellule de batterie (2-10), qui est différente de la première section polaire, et dans des deuxièmes sections polaires des cellules de batterie (2-10), qui sont différentes des premières sections polaires, respectivement.
